# EUROPÄISCHE PATENTSCHRIFT

(11) **EP 0 675 617 B1**
(45) Veröffentlichungstag und Bekanntmachung des Hinweises auf die Patenterteilung: **21.11.2001**
(21) Anmeldenummer: 95103882.7
(22) Anmeldetag: 16.03.1995
(51) Int. Cl.: H04L 12/56, H04L 29/04

(54) **Schaltungsanordnung für Anschlusseinheiten einer ATM-Koppeleinrichtung**
Circuit arrangement for connecting units of an ATM switching device
Dispositif pour unités de raccordement d'un dispositif de commutation ATM

(30) Priorität: 31.03.1994 DE 4411377
(43) Veröffentlichungstag der Anmeldung: 04.10.1995
(73) Patentinhaber: SIEMENS AKTIENGESELLSCHAFT, 80333 München (DE)
(72) Erfinder: Rau, Peter, Dr. Dipl. Phys., D-81241 München (DE)

(56) Entgegenhaltungen:
- EP-A- 0 552 384
- GLOBECOM'92, Bd.3, Dezember 1992, ORLANDO US Seiten 1282 - 1287 P. OECHSLIN ET AL. 'ALI: A VERSATILE INTERFACE CHIP FOR ATM SYSTEMS'
- TELCOM REPORT, Bd.15, Nr.3/4, 1992, MUNCHEN DE Seiten 152 - 155 H. SCHNEIDER 'BREITBANDKOMMUNIKATION AUF SCHNELLEN WEGEN'

## Beschreibung

Die Erfindung betrifft eine Schaltungsanordnung für Anschlußeinheiten einer ATM-Koppeleinrichtung gemäß Oberbegriff des Patentanspruches 1. Eine derartige Schaltungsanordnung ist bereits durch die europäische Patentanmeldung EP 0 500 238 A1 bekannt. Dabei ist in dieser ausgeführt, daß in einer Anschlußeinheit unter anderem ein inhaltsadressierbarer Speicher vorgesehen ist, der so programmiert sein kann, daß für die Umsetzung von logischen Adressen auf physikalische Adressen auf Treffer nur hinsichtlich der Pfadkennung, nur hinsichtlich der Verbindungskennung oder hinsichtlich Pfadkennung und Verbindungskennung überprüft wird, ohne auf die Auswertung der Kennzeichnungsinformationen zum Zwecke einer unterschiedlichen Handhabung der in virtuellen Pfaden verlaufenden virtuellen Verbindungen näher einzugehen.

Es ist nun Aufgabe der vorliegenden Erfindung, einen Weg zu zeigen, wie eine Schaltungsanordnung gemäß Oberbegriff des Patentanspruches 1 ausgebildet werden kann, um einer dem inhaltsadressierbaren Speicher zugeführten Kennzeichnungsinformation wahlweise unterschiedliche Speicheradressen und damit wahlweise unterschiedliche, in dem Schreib-/Lesespeicher gespeicherte Informationen für die Weiterleitung der jeweiligen Nachrichtenzelle zuzuordnen.

Gelöst wird diese Aufgabe durch die im Patentanspruch 1 angegebenen schaltungstechnischen Merkmale.

Der Vorteil der Erfindung besteht darin, daß durch eine erste Priorisierung einer oder mehrerer in dem inhaltsadressierbaren Speicher gespeicherter Kennzeichnungsinformationen Nachrichtenzellen bestimmter virtueller Verbindungen eines virtuellen Pfades aus diesem abgezweigt werden können,d.h. daß die Nachrichtenzellen dieser Verbindung bzw. Verbindungen über einen von dem für den virtuellen Pfad festgelegten Weg abweichenden Weg weitergeleitet werden können. Für die übrigen Verbindungen des virtuellen Pfades ist dagegen ein einheitlicher Weg festgelegt.

Eine zweckmäßige Ausgestaltung der Erfindung ergibt sich aus dem Patentanspruch 2. Der Vorteil dieser Ausgestaltung besteht dabei darin, daß durch eine alternativ oder zusätzlich zu der ersten Priorisierung vorgenommene zweite Priorisierung für eine oder mehrere in dem inhaltsadressierbaren Speicher gespeicherte Kennzeichnungsinformationen bestimmte virtuelle Pfade einer festgelegten Pfadgruppe, die durch eine festgelegte Anzahl höherwertiger Bits der zugehörigen Pfadkennung gekennzeichnet ist, von dieser Pfadgruppe abgezweigt und damit über einen von dem Weg der Pfadgruppe abweichenden Weg weitergeleitet werden können.

Eine weitere vorteilhafte Ausgestaltung der Erfindung ergibt sich aus dem Patentanspruch 3.

Die vorliegende Erfindung wird nunmehr anhand von Zeichnugen beispielsweise näher erläutert.
- FIG.1: zeigt in einem Blockschaltbild eine Koppeleinrichtung, bei der die Erfindung angewandt ist,
- FIGUREN 2 und 3: geben ein erstes Beispiel für das Prinzip der vorliegenden Erfindung wieder,
- FIG.4: zeigt einen möglichen Aufbau eines in den in FIG.1 schematisch dargestellten Anschlußeinheiten jeweils vorhandenen inhaltsadressierbaren Speichers,
- FIGUREN 5 und 6: geben ein weiteres Beispiel für das Prinzip der vorliegenden Erfindung wieder und
- FIG.7: zeigt einen möglichen Aufbau eines inhaltsadressierbaren Speichers im Hinblick auf das in den FIGUREN 5 und 6 angegebene Beispiel.

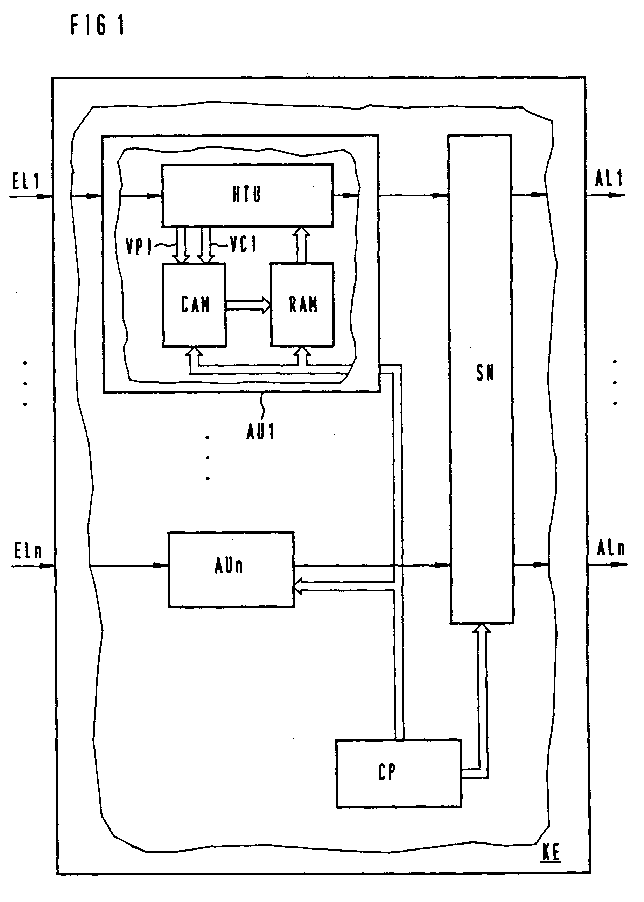

In FIG.1 ist schematisch eine nach dem asynchronen Transfermodus (ATM) arbeitende Koppeleinrichtung KE dargestellt, an welche eine Mehrzahl von Eingangsleitungen EL1 bis ELn sowie eine Mehrzahl von Ausgangsleitungen AL1 bis ALn angeschlossen sind. Bei diesen möge es sich um Teilnehmer-Anschlußleitungen oder um Verbindungsleitungen zu anderen Koppeleinrichtungen handeln. Über diese Eingangsleitungen und Ausgangsleitungen werden gemäß dem asynchronen Transfermodus Nachrichtenzellen übertragen, welche jeweils über einen externen Zellenkopf sowie einen die Nutzinformationen führenden Informationsteil verfügen. In dem jeweiligen externen Zellenkopf möge dabei eine Kennzeichnungsinformation enthalten sein, welche aus einer den jeweiligen virtuellen Pfad kennzeichnenden Pfadkennung (VPI) und einer die in diesem Pfad geführte virtuelle Verbindung kennzeichnenden Verbindungskennung (VCI) gebildet ist.

Jeder der zuvor genannten Eingangsleitungen EL1 bis ELn ist eine gesonderte Anschlußeinheit zugeordnet. Diese Anschlußeinheiten sind entsprechend ihrer Zuordnung zu den Eingangsleitungen mit AU1 bis AUn bezeichnet. Durch die jeweilige Anschlußeinheit wird dabei bei Auftreten einer Nachrichtenzelle deren externer Zellenkopf unter anderem hinsichtlich der darin enthaltenen Kennzeichnungsinformation ausgewertet. Dabei wird bei dem vorliegenden Ausführungsbeispiel ein dieser Kennzeichnungsinformation entsprechender interner Zellenkopf bereitgestellt, in welchem unter anderem eine Wegeinformation enthalten ist, durch die der Weg durch ein mit den Anschlußeinheiten verbundenes Koppelnetz SN der Koppeleinrichtung KE festlegt ist. Dieser interne Zellenkopf wird der jeweiligen. Nachrichtenzelle vorangestellt. Dies ist auch als sogenanntes "Self-Routing"-Prinzip bekannt. Alternativ dazu kann jedoch durch die jeweilige Anschlußeinheit auch lediglich der bisherige externe Zellenkopf einer Nachrichtenzelle umgewertet, d.h. durch einen neuen externen Zellenkopf ersetzt werden, was als sogenanntes Umwerteprinzip bekannt ist. Der für die jeweilige, in einem externen Zellenkopf enthaltene Kennzeichnungsinformation relevante interne bzw. neue externe Zellenkopf wird dabei beispielsweise durch eine der Koppeleinrichtung KE zugehörige, auch das Koppelnetz SN steuernde zentrale Steuereinrichtung CP bereitgestellt, und zwar im Zuge des Aufbaus der jeweiligen virtuellen Verbindung, falls es sich bei der Koppeleinrichtung KE um eine Wählvermittlungseinrichtung, oder mit dem Einrichten der jeweiligen virtuellen Verbindung, falls es sich bei der Koppeleinrichtung KE um einen sogenannten "cross connect" handelt.

Für die Realisierung der vorstehend genannten Funktionen weist jede der Anschlußeinheiten AU1 bis AUn, wie für die Anschlußeinheit AU1 angegeben, eine Zellenkopf-Behandlungseinrichtung HTU sowie eine einen inhaltsadressierbaren Speicher CAM und einen damit verbundenen Schreib-/Lesespeicher RAM aufweisende Speicheranordnung auf. Der inhaltsadressierbare Speicher CAM erhält dabei bei Auftreten einer Nachrichtenzelle die in dieser enthaltene, zuvor erwähnte Kennzeichnungsinformation (VPI/VCI) zugeführt und steuert mit einer dieser zugeordneten Speicheradresse den zugehörigen Schreib-/Lesespeicher RAM an. Daraufhin stellt dieser der Zellenkopf-Behandlungseinrichtung HTU einen in dem durch die Speicheradresse angesteuerten Speicherplatz gespeicherten internen Zellenkopf bzw. einen neuen externen Zellenkopf bereit, der der gerade vorliegenden Nachrichtenzelle vorangestellt wird bzw. der den bisherigen externen Zellenkopf ersetzt.

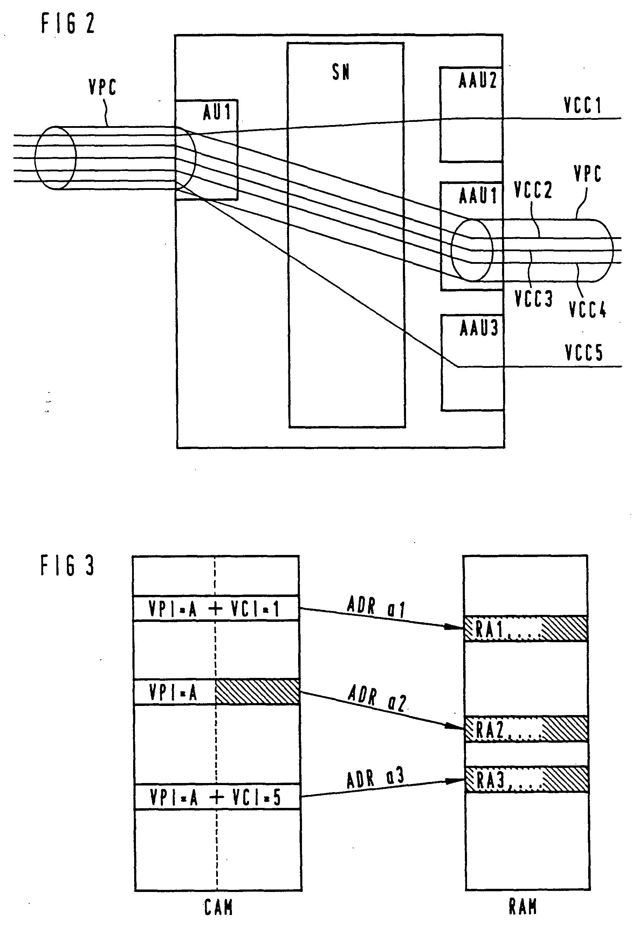

Bei dem vorliegenden Ausführungsbeispiel ist nun, wie in FIG.2 dargestellt, vorgesehen, daß von den in einem virtuellen Pfad geführten virtuellen Verbindungen bestimmte Verbindungen abgezweigt werden können, die dann über einen von dem für den virtuellen Pfad festgelegten Weg abweichenden Weg weitergeführt werden. Nach FIG.2 verläuft über die Anschlußeinheit AU1 ein virtueller Pfad VPC, dem virtuelle Verbindungen VCC1 bis VCC5 zugehörig sind. Dabei werden die virtuellen Verbindungen VCC2 bis VCC4 weiterhin innerhalb des virtuellen Pfades VPC gemeinsam über das Koppelnetz SN und über eine ausgangsseitige Anschlußeinheit AAU1 geführt. Dagegen werden die virtuellen Verbindungen VCC1 und VCC5 von dem virtuellen Pfad abgezweigt und über das Koppelnetz SN und über eine ausgangsseitige Anschlußeinheit AAU1 bzw. AAU3 geleitet.

Nach FIG 3 sei bei dem angenommenen Beispiel dem virtuellen Pfad VPC die Pfadkennung VPI=A, der virtuellen Verbindung VCC1 die Verbindungskennung VCI=1 und der virtuellen Verbindung VCC5 die Verbindungskennung VCI=5 zugewiesen. Um nun die zuvor erwähnte Abzweigung durchzuführen, werden in drei Speicherbereiche des inhaltsadressierbaren Speichers CAM drei Kennzeichnungsinformationen eingetragen, und zwar die Kennzeichnungsinformation VPI=A+VCI=1 für die Verbindung VCC1, die Kennzeichnungsinformation VPI=A+VCI=5 für die Verbindung VCC5 und die Kennzeichnungsinformation VPI=A für die übrigen Verbindungen VCC2,...,VCC4. Den Kennzeichnungsinformationen ist dabei jeweils eine Markierungsinformation beispielsweise in Form eines Prioritätsbits VVCI zugeordnet. Durch einen ersten logischen Pegel, beispielsweise durch den logischen Pegel "1", dieses Prioritätsbits ist angezeigt, daß die jeweilige Kennzeichnungsinformation vollständig, d.h. VPI+VCI, gültig ist. Dagegen gibt der zweite logische Pegel, der logische Pegel "0", des Prioritätsbits VVCI an, daß lediglich die Pfadkennung VPI der jeweiligen Kennzeichnungsinformation gültig ist, d.h. die zugehörige Verbindungskennung VCI ist maskiert. Für die Kennzeichnungsinformationen der Verbindungen VCC1 und VCC5 ist das jeweils zugehörige Prioritätsbit VVCI auf "1" gesetzt. Für die den übrigen Verbindungen (VCC2, ..., VCC4) gemeinsam zugehörige Kennzeichnungsinformation ist dagegen das zugehörige Prioritätsbit VVCI auf "0" gesetzt.

Bei Auftreten einer Nachrichtenzelle in der in FIG 1 dargestellten Zellenkopf-Behandlungseinrichtung HTU wird die in dem zugehörigen Zellenkopf enthaltene Kennzeichnungsinformation (VPI und VCI) dem zugehörigen inhaltsadressierbaren Speicher CAM als Suchwort zugeführt. Dieser Speicher wird daraufhin auf das Vorhandensein einer entsprechenden gespeicherten Kennzeichnungsinformation durchsucht. Liegt eine solche identische Kennzeichnungsinformation und damit ein Tref fer ("Match") vor, so wird als Ergebnis die Speicheradresse angegeben, unter der die identische Kennzeichnungsinformation gefunden wurde. Bei Vorliegen einer Nachrichtenzelle der Verbindung VCC1 wird also beispielsweise nach FIG 3 eine Speicheradresse ADRa1, bei Vorliegen einer Nachrichtenzelle der Verbindung VCC5 eine Speicheradresse ADRa3 und bei Vorliegen einer Nachrichtenzelle der übrigen Verbindungen VCC2, ..., VCC4 eine Speicheradresse ADRa2 bereitgestellt. Mit diesen Speicheradressen wird dann der dem inhaltsadressierbaren Speicher CAM nachgeschaltete Schreib-/Lesespeicher RAM (FIG 1) angesteuert. Unter der jeweiligen Speicheradresse ist dabei ein zuvor erwähnter interner bzw. neuer externer Zellenkopf gespeichert, der auf die Ansteuerung hin der Zellenkopf-Behandlungseinrichtung HTU zugeführt wird.

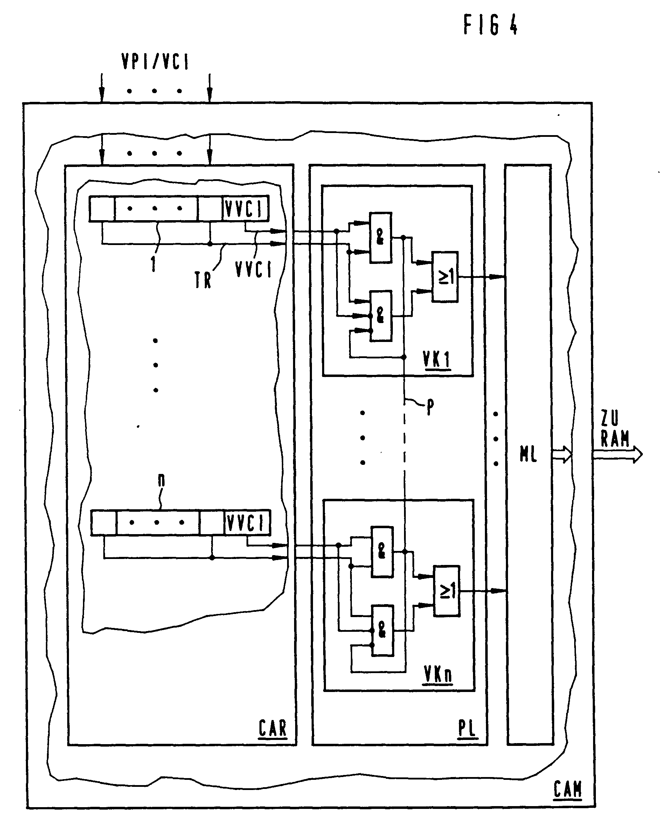

Bei dem gerade erläuterten Durchsuchen des inhaltsadressierbaren Speichers CAM nach Kennzeichnungsinformationen für die Verbindungen VCC1 und VCC5 wird zusätzlich ein Treffer mit der für die übrigen Verbindungen gespeicherten Kennzeichnungsinformation erkannt, da in dieser der Verbindungskennungs-Teil maskiert ist. Um einen daraus resultierenden Mehrfachtreffer zu unterdrücken, ist die Kennzeichnungsinformation für die Verbindung VCC1 bzw. VCC5 aufgrund des zugeordneten Prioritätsbits VVCI jedoch gegenüber der für die übrigen Verbindungen VCC2,...,VCC4 gespeicherten Kennzeichnungsinformation mit maskiertem Verbindungskennungs-Teil priorisiert. Diese Priorisierung bewirkt dabei, daß für die Verbindung VCC1 bzw. VCC5 tatsächlich nur die zuvor genannte Adresse ADRa1 bzw. ADRa3 bereitgestellt wird. Eine mögliche Ausgestaltung des inhaltsadressierbaren Speichers CAM für die Steuerung dieser Priorisierung wird nachfolgend anhand der FIG 4 erläutert.

In FIG 4 ist ein möglicher Aufbau des in FIG 1 angedeuteten inhaltsadressierbaren Speichers CAM dargestellt, wobei lediglich die zum Verständnis der vorliegenden Erfindung erforderlichen Schaltungsteile dargestellt sind. Danach weist dieser inhaltsadressierbare Speicher CAM ein CAM-Array CAR auf, welches über eine Mehrzahl n von Array-Zeilen verfügt. Jede dieser Array-Zeilen ist aus einer Anzahl von Zellen gebildet, die der Anzahl der Bitstellen eines Suchwortes entspricht. Bei vorliegendem Ausführungsbeispiel entspricht also die Anzahl der Zellen einer Array-Zeile der Anzahl von Bitstellen einer Kennzeichnungsinformation (VPI+VCI). Die Zellen einer Array-Zeile dienen dabei für die Speicherung einer solchen Kennzeichnungsinformation und bestehen jeweils aus einer Speicherzelle mit einem integrierten Komparator. Der jeweilige Komparator führt einen Bitvergleich zwischen einer Bitstelle eines dem inhaltsadressierbaren Speichers CAM zugeführten Suchwortes und eines gespeicherten Wortes durch, d.h. bei dem vorliegenden Ausführungsbeispiel wird eine zugeführte Kennzeichnungsinformation bitweise mit einer in der jeweiligen Array-Zeile gespeicherten Kennzeichnungsinformation verglichen. Dabei zeigt der jeweilige Komparator an, ob in der zugehörigen Bitstelle eine Übereinstimmung, d.h. ein Treffer, vorliegt oder nicht. Die Komparatoren einer Array-Zeile sind jedoch so miteinander verkettet, daß lediglich bei einer Übereinstimmung in sämtlichen Bitstellen über eine gemeinsame Trefferleitung TR ein Treffer angezeigt wird.

Darüber hinaus ist jeder der Array-Zeilen ein Speicherelement zugehörig, in welchem das oben bereits erwähnte Prioritätsbit WCI gespeichert ist und welches an eine Steuerleitung VVCI angeschlossen ist.

Dem CAM-Array CAR ist eine Prioritätslogikanordnung PL nachgeschaltet, welcher individuell für die einzelnen Array-Zeilen die gemeinsame Trefferleitung TR sowie die das Prioritätsbit führende Steuerleitung VVCI zugeführt sind. Trefferleitung und Steuerleitung einer Array-Zeile sind dabei einer zeilenindividuellen Verknüpfungsanordnung VK1,...,VKn zugeführt. Diese besteht aus einem mit diesen Leitungen verbundenen ersten UND-Glied, dessen Ausgang einem Eingang eines ODER-Gliedes zugeführt ist. Darüber hinaus sind die Ausgänge der ersten UND-Glieder sämtlicher Verknüpfungsanordnungen VK1,...,VKn über eine Prioritätsleitung P miteinander verbunden. Zusätzlich weist jede der Verknüpfungsanordnungen ein zweites UND-Glied mit drei Eingängen auf, wobei zwei dieser Eingänge als invertierende Eingänge ausgebildet sind. Ein erster dieser invertierenden Eingänge ist mit der Prioritätsleitung P verbunden, während der verbleibende invertierende Eingang mit der zugehörigen, das Prioritätsbit führenden Steuerleitung VVCI verbunden ist. Ausgangsseitig ist dieses zweite UND-Glied an einen weiteren Eingang des zuvor genannten ODER-Gliedes angeschlossen.

Durch die über die Prioritätsleitung P miteinander verbundenen Verknüpfungsanordnungen VK1,...,VKn wird erreicht, daß bei Vorliegen eines Treffers für ein gespeichertes Wort mit dem Prioritätsbit VVCI=1, bei vorliegendem Ausführungsbeispiel für eine gespeicherte Kennzeichnungsinformation mit VVCI=1, lediglich am Ausgang des ODER-Gliedes der in Frage kommenden Verknüpfungsanordnung ein einen Treffer anzeigendes Treffersignal bereitgestellt ist. Die übrigen Verknüpfungsanordnungen werden dagegen über die Prioritätsleitung P so gesteuert, daß am Ausgang des jeweils zugehörigen ODER-Gliedes ein von dem genannten Treffersignal abweichender logischer Pegel auftritt. Auf diese Weise wird die Anzeige eines oben erwähnten Mehrfachtreffers unterbunden. Liegt dagegen lediglich ein Treffer mit einem Prioritätsbit VVCI=0 vor, so wird durch die in Frage kommende Verknüpfungsanordnung ein Treffersignal angezeigt.

Sämtliche Verknüpfungsanordnungen VK1,...,VKn sind über das jeweils zugehörige ODER-Glied mit einer Trefferlogik ML verbunden. Diese wertet die an diesen ODER-Gliedern auftretenden Pegel aus und gibt bei Vorliegen eines Treffersignals eine diesem Treffersignal entsprechende Speicheradresse an den in FIG 1 dargestellten Schreib-/Lesespeicher RAM ab. Wie zuvor erwähnt, entspricht diese Speicheradresse derjenigen Speicheradresse des inhaltsadressierbaren Speichers CAM, unter der das Suchwort, hier die Kennzeichnungsinformation, gefunden wurde.

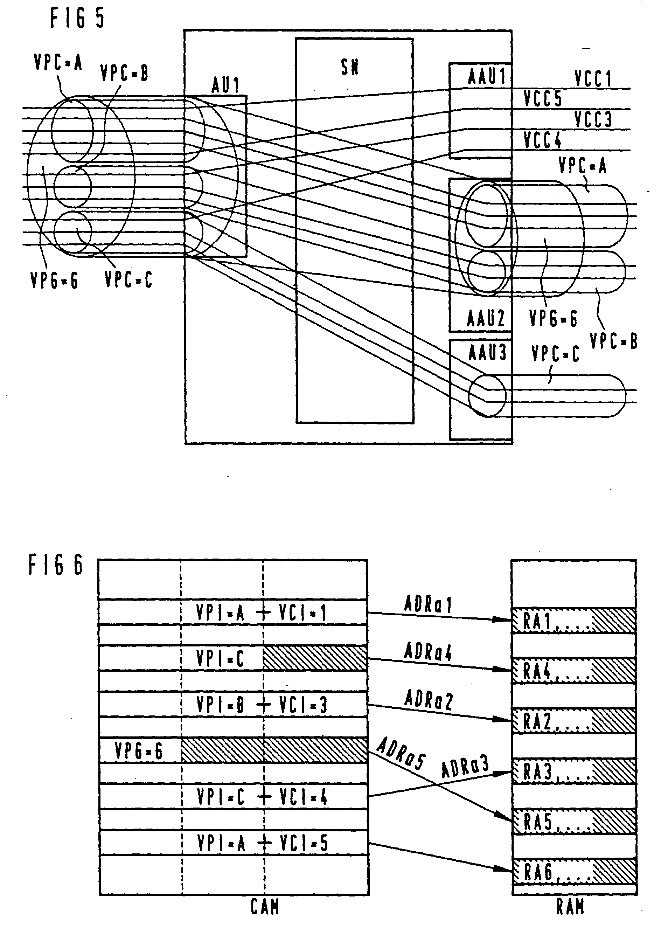

In den FIGUREN 5 und 6 ist ein Beispiel dafür dargestellt, daß aus einer über die Anschlußeinheit AU1 geführten Pfadgruppe VPG=G, bestehend aus den virtuellen Pfaden VPC=A, VPC=B und VPC=C der virtuelle Pfad VPC=C und zusätzlich aus dem virtuellen Pfad VPC=A die virtuellen Verbindungen VCI=1 und VCI=5, aus dem virtuellen Pfad VPC=B die virtuelle Verbindung VCI=3 und aus dem virtuellen Pfad VPC=C die virtuelle Verbindung VCI=4 ausgeschieden werden. Hierfür werden in dem inhaltsadressierbaren Speicher CAM, wie anhand der FIG 3 bereits erläutert, entsprechende Kennzeichnungsinformationen eingetragen. Ein Unterschied zu dem Beispiel der FIG 3 besteht lediglich darin, daß zusätzlich zu den Kennzeichnungsinformationen für den auszuscheidenden virtuellen Pfad VPC=C und die genannten auszuscheidenden virtuellen Verbindungen eine Kennzeichnungsinformation für die gemeinsam weiterzuleitende Pfadgruppe VPG=G in dem inhaltsadressierbaren Speicher CAM vorgesehen ist. Dabei ist in der Kennzeichnungsinformation für den auszuscheidenden virtuellen Pfad VPI=C der zugehörige Verbindungskennungsteil VCI durch Setzen des zugehörigen Prioritätsbits VVCI=0 maskiert. Für die Kennzeichnungsinformation der Pfadgruppe VPG=G wird dagegen sowohl der zugehörige Verbindungskennungsteil VCI als auch ein Teil der Pfadkennung VPI maskiert. Dabei wird davon ausgegangen, daß durch die höherwertigen, nicht maskierten Bits der Pfadkennung die Pfadgruppe VPG=G festgelegt ist. Die Maskierung für die Pfadgruppe erfolgt dabei mit Hilfe eines weiteren, jeder der in FIG 4 dargestellten Array-Zeilen des CAM-Arrays CAR zugeordneten Prioritätsbits VVPG. Dieses wird beispielsweise bei einer gewünschten Maskierung auf VVPG=1 gesetzt.

Um die gemäß den FIGUREN 5 und 6 angenommene Ausscheidung ordnungsgemäß vornehmen zu können, wird den in FIG 4 dargestellten Verknüpfungsanordnungen VK1,...,VKn der Prioritätslogikanordnung PL jeweils von der zugeordneten Array-Zeile des CAM-Arrays CAR her neben der genannten Trefferleitung TR und Steuerleitung VVCI auch eine das Prioritätsbit VVPG führende Steuerleitung VVPG zugeführt. Die Verknüpfungsanordnungen bewerten jeweils das Prioritätsbit VVCI=1 als höherpriorig gegenüber dem Prioritätsbit VVPG=1. Bei Vorliegen eines Treffers mit dem Prioritätsbit VVCI=1 (Ausscheiden einer einzelnen virtuellen Verbindung) wird demzufolge von der jeweiligen Verknüpfungsanordnung ein Treffersignal an die Trefferlogikanordnung ML abgegeben und gleichzeitig die Abgabe von Treffersignalen der übrigen Verknüpfungsanordnungen unterbunden. In entsprechender Weise wird bei Vorliegen eines Treffers mit den Prioritätsbits VVCI=0 und VVPG=1 lediglich von der jeweiligen Verknüpfungsanordnung ein Treffersignal abgegeben, während die übrigen Verknüpfungsanordnungen für die Abgabe eines solchen Treffersignals gesperrt werden.

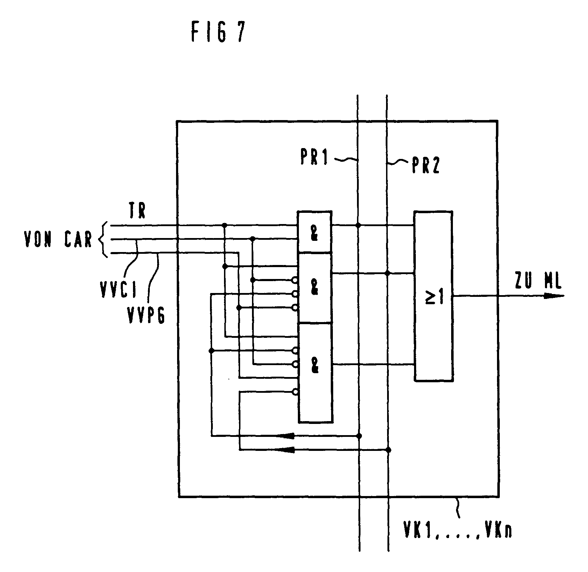

Eine für das anhand der FIGUREN 5 und 6 erläuterte Beispiel mögliche Ausführungsform der Verknüpfungsanordnungen VK1, ...,VKn ist in FIG 7 dargestellt. Danach weist jede der Verknüpfungsanordnungen drei UND-Glieder auf. Ein erstes dieser UND-Glieder ist mit nicht invertierenden Eingängen mit der Trefferleitung TR und der Steuerleitung VVCI und ausgangsseitig über eine Prioritätsleitung PR1 mit den ersten UND-Gliedern der übrigen Verknüpfungsanordnungen verbunden.

Ein zweites UND-Glied der jeweiligen Verknüpfungsanordnung ist über einen nicht invertierenden Eingang mit der Trefferleitung und über drei invertierende Eingänge mit der Steuerleitung VVCI, mit der Prioritätsleitung PR1 und der Steuerleitung VVPG verbunden. Ausgangsseitig ist dieses UND-Glied gemeinsam mit den zweiten UND-Gliedern der übrigen Verknüpfungsanordnungen an eine Prioritätsleitung PR2 angeschlossen.

Das verbleibende dritte UND-Glied der jeweiligen Verknüpfungsanordnung steht über zwei nicht invertierende Eingänge mit der Trefferleitung TR und der Steuerleitung VVPG in Verbindung. Drei invertierende Eingänge sind dagegen an die Prioritätsleitung PR1, die Prioritätsleitung PR2 und an die Steuerleitung VVCI angeschlossen.

Schließlich sind die drei UND-Glieder der jeweiligen Verknüpfungsanordnung mit ihrem jeweiligen Ausgang an ein ODER-Glied herangeführt.

Vorstehend wurde anhand von zwei Beispielen erläutert, wie durch unterschiedlich priorisierte Einträge in dem inhaltsadressierbaren Speicher CAM diesem zugeführten Suchinformationen (Kennzeichnungsinformationen) unterschiedlichen Speicheradressen zugeordnet werden können. Durch eine entsprechende Festlegung der Einträge in dem inhaltsadressierbaren Speicher und einer damit verbundenen Ausgestaltung der Prioritätslogikanordnung PL lassen sich weitere verschachtelte Prioritäten für die einzelnen Einträge definieren, um eine über die Beispiele hinausgehende Zuordnung von dem inhaltsadressierbaren Speicher zugeführten Suchinformationen zu unterschiedlichen Speicheradressen zu erreichen.

Darüber hinaus sei noch darauf hingewiesen, daß die zuvor erläuterten logischen Verknüpfungsfunktionen der Verknüpfungsanordnungen VK1,...,VKn auch mit Hilfe logischer Verknüpfungselemente realisiert werden können, die von den in den FIGUREN 4 und 7 dargestellten logischen Verknüpfungselementen abweichen. Im übrigen kann die Prioritätslogikanordnung PL auch direkt in der Trefferlogikanordnung ML integriert sein.

## Patentansprüche

1. Schaltungsanordnung für einer nach dem asynchronen Transfermodus ATM arbeitenden Koppeleinrichtung zugehörigen Anschlußeinheiten (AU1,...,AUn),
welchen jeweils Nachrichtenzellen zugeführt sind, denen jeweils ein Zellenkopf vorangestellt ist, der eine aus einer Pfadkennung (VPI) und einer Verbindungskennung (VCI) bestehende Kennzeichnungsinformation VPI/VCI führt, wodurch die jeweilige Nachrichtenzelle einem bestimmten virtuellen Pfad und einer in diesem verlaufenden virtuellen Verbindung zugeordnet ist,
und welche jeweils über eine einen inhaltsadressierbaren Speicher(CAM) und einen diesem nachgeschalteten Schreib-/Lesespeicher (RAM) aufweisende Speichereinrichtung verfügen, wobei mit der Kennzeichnungsinformation des Zellenkopfes der jeweiligen Nachrichtenzelle der inhaltsadressierbare Speicher beaufschlagt ist und bei Vorliegen eines Treffers mit einem der gespeicherten Kennzeichnungsinformationen dem Schreib-/ Lesespeicher eine diesem Treffer entsprechende Speicheradresse zugeführt ist, nach deren Maßgabe von dem Schreib-/Lesespeicher (RAM) her eine für die Weiterleitung der jeweiligen Nachrichtenzelle benötigte Information bereitgestellt ist,
**dadurch gekennzeichnet,**
**daß** den in einem virtuellen Pfad verlaufenden virtuellen Verbindungen in dem inhaltsadressierbaren Speicher (CAM) einheitlich eine pfadindividuelle Kennzeichnungsinformation VPI/VCI mit lediglich aktivierter Pfadkennung (VPI) zugeordnet ist,
**daß** zusätzlich für jede aus dem jeweiligen virtuellen Pfad auszuscheidende virtuelle Verbindung eine verbindungsindividuelle Kennzeichnungsinformation mit aktivierter Pfadkennung (VPI) und Verbindungskennung (VCI) zusammen mit einer die verbindungsindividuelle Kennzeichnungsinformation gegenüber der zugehörigen pfadindividuellen Kennzeichnungsinformation priorisierenden ersten Markierungsinformation in dem inhaltsadressierbaren Speicher (CAM) gespeichert ist
und **daß** der inhaltsadressierbare Speicher (CAM) derart ausgebildet ist, daß bei gleichzeitigem Vorliegen eines Treffers mit einer pfadindividuellen Kennzeichnungsinformation und eines Treffers mit einer durch die erste Markierungsinformation priorisierten verbindungsindividuellen Kennzeichnungsinformation eine der letzteren zugeordnete erste Speicheradresse, bei Vorliegen eines Treffers lediglich mit einer pfadindividuellen Kennzeichnungsinformation dagegen eine dieser zugeordnete zweite Speicheradresse bereitgestellt ist.

2. Schaltungsanordnung nach Anspruch 1,
**dadurch gekennzeichnet,**
**daß** den in einer durch eine festgelegte Anzahl höherwertiger Bits einer Pfadkennung (VPI) vorgegebenen Pfadgruppe verlaufenden virtuellen Pfaden in dem inhaltsadressierbaren Speicher (CAM) einheitlich eine gruppenindividuelle Kennzeichnungsinformation VPI/VCI zugeordnet ist, in welcher lediglich die die Pfadgruppe definierenden Bits der Pfadkennung aktiviert sind,
**daß** zusätzlich für jeden aus der jeweiligen Pfadgruppe auszuscheidenden virtuellen Pfad eine pfadindividuelle Kennzeichnungsinformation mit aktivierter Pfadkennung (VPI) zusammen mit einer die pfadindividuelle Kennzeichnungsinformation gegenüber der zugehörigen gruppenindividuellen Kennzeichnungsinformation priorisierenden zweiten Markierungsinformation, die gegenüber der ersten Markierungsinformation einer niedrigeren Priorität zugeordnet ist, in dem inhaltsadressierbaren Speicher (CAM) gespeichert ist
und **daß** der inhaltsadressierbare Speicher (CAM) derart ausgebildet ist, daß bei gleichzeitigem Vorliegen eines Treffers mit einer gruppenindividuellen Kennzeichnungsinformation und eines Treffers mit einer durch die zweite Markierungsinformation priorisierten pfadindividuellen Kennzeichnungsinformation eine der letzteren zugeordnete Speicheradresse, bei Vorliegen eines Treffers lediglich mit einer gruppenindividuellen Kennzeichnungsinformation dagegen eine dieser zugeordnete, von der zuvor genannten Speicheradresse abweichende Speicheradresse bereitgestellt ist.

3. Schaltungsanordnung nach Anspruch 1 oder 2,
**dadurch gekennzeichnet,**
**daß** in dem inhaltsadressierbaren Speicher (CAM) Auswertemittel (PL) vorgesehen sind, durch welche bei gleichzeitigem Vorliegen von Treffern mit Kennzeichnungsinformationen unterschiedlicher Priorität lediglich der Treffer mit der jeweils höheren Priortät gewertet wird.

## Claims

1. Circuit arrangement for connection units (AU1,...,AUn) associated with a switching device operating according to the asynchronous transfer mode ATM,
to which units message cells are in each case fed, which are in each case preceded by a cell header carrying an identification information item VPI/VCI comprising a path identifier (VPI) and a connection identifier (VCI), as a result of which the respective message cell is assigned to a specific virtual path and to a virtual connection running in the latter,
and which units are in each case provided with a memory device having a content-addressable memory (CAM) and a random access memory (RAM) connected downstream of the latter, the identification information item of the cell header of the respective message cell being applied to the content-addressable memory and, given the presence of a match with one of the stored identification information items, a memory address corresponding to this match is fed to the random access memory, according to which memory address an information item required for forwarding the respective message cell is provided from the random access memory (RAM),
**characterized**
**in that** a path-specific identification information item VPI/VCI with only activated path identifier (VPI) is uniformly assigned to the virtual connections running in a virtual path in the content-addressable memory (CAM),
**in that**, in addition, for each virtual connection to be segregated from the respective virtual path, a connection-specific identification information item with activated path identifier (VPI) and connection identifier (VCI) together with a first marking information item, which prioritizes the connection-specific identification information item with respect to the associated path-specific identification information item, is stored in the content-addressable memory (CAM),
and **in that** the content-addressable memory (CAM) is designed in such a way that, given the simultaneous presence of a match with a path-specific identification information item and of a match with a connection-specific identification information item prioritized by the first marking information item, a first memory address assigned to the latter is provided, and, by contrast, given the presence of a match only with a path-specific identification item, a second memory address assigned to the latter is provided.

2. Circuit arrangement according to Claim 1,
**characterized**
**in that** a group-specific identification information item VPI/VCI is uniformly assigned to the virtual paths running in a path group, which is predetermined by a defined number of more significant bits of a path identifier (VPI), in the content-addressable memory (CAM), in which identification information item only the bits of the path identifier which define the path group are activated,
**in that**, in addition, for each virtual path to be segregated from the respective path group, a path-specific identification information item with activated path identifier (VPI) together with a second marking information item which prioritizes the path-specific identification information item with respect to the associated group-specific identification information item and is assigned to a lower priority relative to the first marking information item is stored in the content-addressable memory (CAM),
and **in that** the content-addressable memory (CAM) is designed in such a way that, given the simultaneous presence of a match with a group-specific identification information item and of a match with a path-specific identification information item prioritized by the second marking information item, a memory address assigned to the latter is provided, and, by contrast, given the presence of a match only with a group-specific identification information item, a memory address assigned thereto is provided, which memory address deviates from the previously mentioned memory address.

3. Circuit arrangement according to Claim 1 or 2,
**characterized**
**in that** the content-addressable (CAM) is provided with evaluation means (PL) by which, given the simultaneous presence of matches with identification information items of different priority, only the match with the higher priority in each case is assessed.

## Revendications

1. Arrangement de circuits pour unités de raccordement (AU1, ..., AUn) faisant partie d'un dispositif de commutation fonctionnant selon le mode de transfert asynchrone ATM ou, en français, MTA,
auxquelles sont transmises individuellement des cellules de message, précédées chacune par une en-tête de cellule, qui renferme une information de repérage VPI/VCI comprenant une identification de cheminement (VPI) et une identification de liaison (VCI), si bien que la cellule de message respective est affectée à un cheminement virtuel défini et à une liaison virtuelle qui suit ce dernier,
et qui disposent chacune d'un dispositif de mémorisation comportant une mémoire (CAM) adressable par contenu et une mémoire (RAM) à écriture et lecture, montée en aval de cette dernière, la mémoire adressable par contenu étant chargée avec l'information de repérage de l'en-tête de la cellule de message respective et, dans le cas où une coïncidence avec l'une des informations de repérage mémorisées apparaît, une adresse de mémoire correspondant à cette coïncidence étant appliquée à la mémoire à écriture et lecture, cette mémoire à écriture et lecture (RAM) mettant à disposition, en fonction de l'adresse de mémoire, une information nécessaire à la poursuite de la transmission de la cellule de message respective,
**caractérisé par le fait**
**que**, dans la mémoire (CAM) adressable par contenu, d'une façon uniforme, une information de repérage VPINCI, particulière au cheminement et dont seulement l'identification de cheminement (VPI) est activée, est affectée aux liaisons virtuelles qui suivent un cheminement virtuel,
**que**, en supplément pour chaque liaison virtuelle déviant du cheminement virtuel respectif, une information de repérage, particulière à la liaison et dont l'identification de cheminement (VPI) et l'identification de liaison (VCI) sont activées, est mémorisée dans la mémoire (CAM) adressable par contenu en commun avec une première information de marquage qui donne la priorité à l'information de repérage particulière à la liaison par rapport à l'information correspondante d'identification particulière au cheminement et
**que** la mémoire (CAM) adressable par contenu est conçue de telle sorte que, si une coïncidence avec une information de repérage particulière au cheminement apparaît en même temps qu'une coïncidence avec une information de repérage, particulière à la liaison et qui a reçu une priorité grâce à la première information de marquage, une première adresse de mémoire affectée à cette dernière information de repérage est mise à disposition et si, par contre, une coïncidence avec seulement une information de repérage particulière au cheminement apparaît, une deuxième adresse de mémoire affectée à cette dernière information de repérage est mise à disposition.

2. Arrangement de circuits selon la revendication 1
**caractérisé par le fait**
**que**, d'une façon uniforme, une information de repérage VPI/VCI, particulière aux groupes, est affectée, dans la mémoire (CAM) adressable par contenu, aux cheminements virtuels qui suivent un groupe de cheminements prédéterminé par un nombre fixe de bits de rang supérieur d'une identification de cheminement (VPI), seuls les bits de l'identification de cheminement, qui définissent le groupe de cheminement étant activés dans l'information de repérage VPI/VCI,
**que**, en supplément pour chaque cheminement virtuel qui dévie du groupe respectif de cheminements, une information de repérage, particulière au cheminement et dont l'identification de cheminement (VPI) est activée, est mémorisée, dans la mémoire (CAM) adressable par contenu, en commun avec une deuxième information de marquage, qui donne à l'information de repérage particulière au cheminement, une priorité inférieure à la priorité de la première information de marquage, et
**que** la mémoire (CAM) adressable par contenu est conçue de telle sorte que, si une coïncidence avec une information de repérage particulière au groupe apparaît en même temps qu'une coïncidence avec une information de repérage, particulière au cheminement et qui a reçu une priorité grâce à la deuxième information de marquage, une adresse de mémoire affectée à cette dernière information de repérage est mise à disposition et si, par contre, une coïncidence avec seulement une information de repérage particulière au groupe apparaît, une adresse de mémoire affectée à cette dernière information de repérage et différente de l'adresse de mémoire citée précédemment est mise à disposition.

3. Dispositif de circuit selon la revendication 1 ou 2
**caractérisé par le fait**
**que**, dans la mémoire (CAM) adressable par contenu, des moyens d'évaluation (PL) sont prévus, grâce auxquels, en cas d'apparition simultanée de coïncidences avec des informations de repérage de priorités différentes, seule la coïncidence avec la priorité respectivement la plus élevée est évaluée.
